# EUROPEAN PATENT SPECIFICATION

(11) **EP 3 088 371 B1**
(45) Date of publication and mention of the grant of the patent: **01.05.2019**
(21) Application number: 16155155.1
(22) Date of filing: 11.02.2016
(51) Int. Cl.: C03B 33/03

(54) **A METHOD FOR CUTTING AND DISPLACING A GLASS SHEET ALONG A WORKING PLANE OF A GLASS CUTTING MACHINE AND ASSOCIATED MACHINE**
VERFAHREN ZUM SCHNEIDEN UND FORDERN VON GLASSCHEIBEN AUF EINEM SCHNEIDTISCH UND DAZU GEHÖRENDE MASCHINE
MÉTHODE POUR COUPER ET DÉPLACER UNE FEUILLE DE VERRE SUR LE PLAN DE TRAVAIL D'UNE MACHINE DE DÉCOUPE ET MACHINE ASSOCIÉE

(30) Priority: 29.04.2015 IT UB20150016
(43) Date of publication of application: 02.11.2016
(73) Proprietor: Biesse S.p.A., 61122 Chiusa di Ginestreto (Pesaro Urbino) (IT)
(72) Inventor: AIMAR, Giacomo, 61122 Chiusa di Ginestreto (Pesaro Urbino) (IT); SIDERI, Paolo, 61122 Chiusa di Ginestreto (Pesaro Urbino) (IT)
(74) Representative: De Bonis, Paolo

(56) References cited:
- EP-A1- 2 177 482
- EP-A1- 2 583 951
- EP-A2- 1 609 767

## Description

### Filed of the invention

The present invention relates to the cutting of glass sheet, be them single layer glass sheet (so called "float glass"), laminated glass sheets, or low emission glass sheets (low-e), and in particular it relates to methods for cutting and displacing a glass sheet along a working plane of a glass cutting machine, as well as to a corresponding machine. Examples of known methods are offered, i.a., by documents EP 2 583 951 A1, and EP 1 609 767 A2.

### Description of prior art and general technical problem

At present, the usual working cycle of a glass sheet cutting machine comprises a first step of advancing the glass sheet to be cut on a working plane of the machine, in particular in a longitudinal direction of the machine itself.

The advancement is made possible by the fact that, in addition to the action of feeding means of the glass sheet, the working plane of a machine is provided with a plurality of nozzles providing compressed air that make up an air cushion on which the sheet may slide with a driving force of reduced entity.

The sheet is thus positioned in a desired manner, with respect to a cutting line of the machine with the help of a measure bridge, which includes in general a plurality of abutment elements for the glass sheets movable in the longitudinal direction along the working plane of the machine and configured to detect the position of a glass sheet with respect to the cutting line (and in general with respect to the working plane), and possibly to correct the latter until a desired position is obtained.

Once that the position of the glass sheet has been detected and that the same has been correctly positioned with respect to the cutting line, the abutment elements of the measure bridge are brought below the working plane of the machine, the distribution of compressed air trough the nozzles is interrupted and the cutting cycle is started, which is carried out in a manner per se known.

Downstream of the cutting operation, the glass sheet which has just been cut is displaced in a longitudinal direction up to the end of the working plane of the machine to reach an unloading position of the cut sheet, in order for the latter to be picked up and sent towards further processing stations. This requires, i.a. to re-activate the air cushion on the working plane of the machine to favour the displacement of the cut sheet.

During the displacement of the sheet to the end of the working plane, the machine goes through a so called "dead time", because it is impossible to move onto a new cutting operation having to maintain the air cushion active for the displacement of the sheet. The maintenance of the air cushion in activation condition is in fact incompatible with the performance of the cutting operation in so far as it would not guarantee the maintenance of the desired position of the sheet.

It is furthermore to be noted that the displacement of the sheet towards the unloading position is in many known solution generally performed entirely manually, with remarkable lengthening of the times for complete cut of a glass primitive.

Others solutions available in the prior art envisage instead to use abutment elements of the measure bridge to engage the sheet just cut in correspondence of a trailing edge thereof, that is the edge just created with the cutting operation and located behind (upstream) of a leading edge in the direction of advancement, and drive the sheet to the end of the working plane.

However, such a solution does not eliminate the dead times of the working cycle at least for two reasons, in particular:
- the measure bridge is used as a displacement element of the sheet just cut and it is furthermore not available for the performance of a further positioning operation of the subsequent portion of sheet that has to undergo a new cutting operation, and
- the driving of the sheet by the measure bridge forces to maintain the air cushion in activation conditions, thereby rendering unviable - independently of the limits above - the performance of a cutting operation until the termination of the translation of the sheet.

Another known solution, that similarly does not solve the problem of the dead times of the working cycle, consists in using belts for driving the cut sheet to the end of the line. However, even though the air cushion might be deactivated, it would anyway not be possible to start a new positioning operation of the sheet to be cut until the belts that carry the cut sheet are lowered below the working plane.

### Object of the invention

The object of the invention is to overcome the technical problems previously described. In particular, the object of the invention is that of eliminating the dead times of the machine between two subsequent cutting operations and deriving from the need to displace the sheet just cut towards an unloading position.

### Summary of the invention

The object of the invention is achieved by a method, a mobile assembly for a measure bridge, by a relative measure bridge and by a glass sheet cutting machine having the features forming the subject of the appended claims, which form an integral part of the technical disclosure herein provided in relation to the invention.

Particularly, the object of the invention is achieved by method for cutting and displacing a glass sheet along a working plane of a glass cutting machine, said glass cutting machine comprising:
- a working plane,
- a measure bridge movable along said working plane in a longitudinal direction, said measure bridge including a plurality of abutment members for said glass sheet movable with said measure bridge in a longitudinal direction and further displaceable between a position protruding above said working plane and a position below said working plane, the measure bridge further including one or more engagement members, the method comprising the following steps:
   - a first step of advancement along said working plane of a glass sheet to be cut,
   - a second step of positioning of said glass sheet to be cut in a desired manner with respect to a cutting line of the machine with the assistance of said measure bridge,
   - a third step of cutting of said glass sheet along said cutting line with obtainment of a cut glass sheet,
   - a fourth step of displacement of said abutment members below said working plane and displacement of the measure bridge below said cut glass sheet,
   - a fifth step of engagement of the cut glass sheet by means of one or more engagement members provided on said measure bridge,
   - a sixth step of impression of a relative movement between said cut glass sheet and said abutment members in a longitudinal direction so as to uncover said abutment members previously below the cut glass sheet,
   - a seventh step of displacement of the abutment members above the working plane,
   the method further including performing a repetition of each of the steps first to seventh, wherein:
   - during the repetition of said second step the measure bridge assists in the positioning of the glass sheet by means of said one or more abutment members and holds the glass sheet cut during the third step,
   - during the repetition of the third step the measure bridge is displaced along said working plane to bring said cut glass sheet in an unloading position from said machine.

The object of the invention is further reached by a mobile assembly for a measure bridge of a glass sheet cutting machine, the mobile assembly including:
- a support frame,
- an abutment member for a glass sheet displaceable between a position above a working plane of glass sheet cutting machine, and a position below said working plane,
the mobile assembly being characterized in that it further includes an engagement member configured for engaging a cut glass sheet which is located on said working plane, said engagement member being movable with respect to said abutment member so as to vary a distance thereof along a longitudinal direction of the machine, said abutment member and said engagement member being fitted on said support frame.

The object of the invention is further reached by a measure bridge including a plurality of mobile assemblies according to what described here above.

Last, the object of the invention is achieved by a glass sheet cutting machine including:
- a working plane,
- a cutting bridge, and
- a measure bridge movable along a longitudinal direction of the machine and configured for assisting in the positioning of a glass sheet in a desired manner with respect to a cutting line of the machine,
the machine being characterized in that said measure bridge includes a plurality of mobile assemblies according to what described here above.

### Brief description of the figures

The invention will now be described with reference to the attached figures, provided purely by way of non limiting example, wherein:
- figure 1 is a plan view of a glass cutting machine according to the present invention wherein certain components are removed or schematically represented for better clarity,
- figures 1A and 1B show two operating position of a for a measure bridge according to the invention,
- figure 2 is a partial plan view of a machine according to the invention in a first operating condition within the framework of a cutting method according to the invention,
- figure 2A is a side view corresponding to the operating condition of figure 2,
- figure 2B is an enlarged view according to the arrow IIB of figure 2A,
- figure 2C is a schematic perspective view of some components of a cutting bridge of the machine of figure 1,
- figure 2D is a schematic perspective view of certain components of a cutting bridge of the machine of figure 1 according to a preferred embodiment,
- figure 3 is a view similar to figure 2 but showing a further operating condition within the framework of the method according to the invention,
- figure 3A is an enlarged side view similar to that of figure 2B but relating to the operating condition of figure 3,
- figure 4 is a plan view similar to that of figures 2 and 3, but relating to yet further operating condition within the framework of the method according to the invention,
- figure 4A is an enlarged side view similar to those of figures 2B and 3A,
- figure 5 is a plan view similar to those of figures 2, 3, 4 but referred to yet further operating condition within the framework of the method according to the invention,
- figure 5A is an enlarged view similar to that of figures 2B, 3A, 4A but referred to the operating condition of figure 5,
- figure 6 is a plan view similar to that of figures 2, 3, 4, 5 but referred to yet a further operating condition within the framework of the method according to the inventions,
- figure 6A is an enlarged view corresponding to that of figures 2B, 3A, 4A, 5A but relating to the operating condition of figure 6,
- figure 7 is a plan view similar to that of figure 2 to 6 but referred to yet a further operating condition within the framework of the method according to the invention,
- figure 7A is a side view similar to that of figure 2A but referred to the condition of figure 7,
- figures 8A and 8B show two operating conditions of a variant of the mobile assembly of figures 1A, 1B.

### Detailed description

In the following description various specific details aimed at a thorough understanding of the embodiments of the invention are shown. The embodiments may be practised without one or more of the specific details, with the other methods, components, materials, etc. In other cases, structures, constructional details, materials or known operations are not shown or described in detail in so far as they may be carried out in whatever known manner, and also in so far as they do not fall, considered per se, within the scope of the present invention.

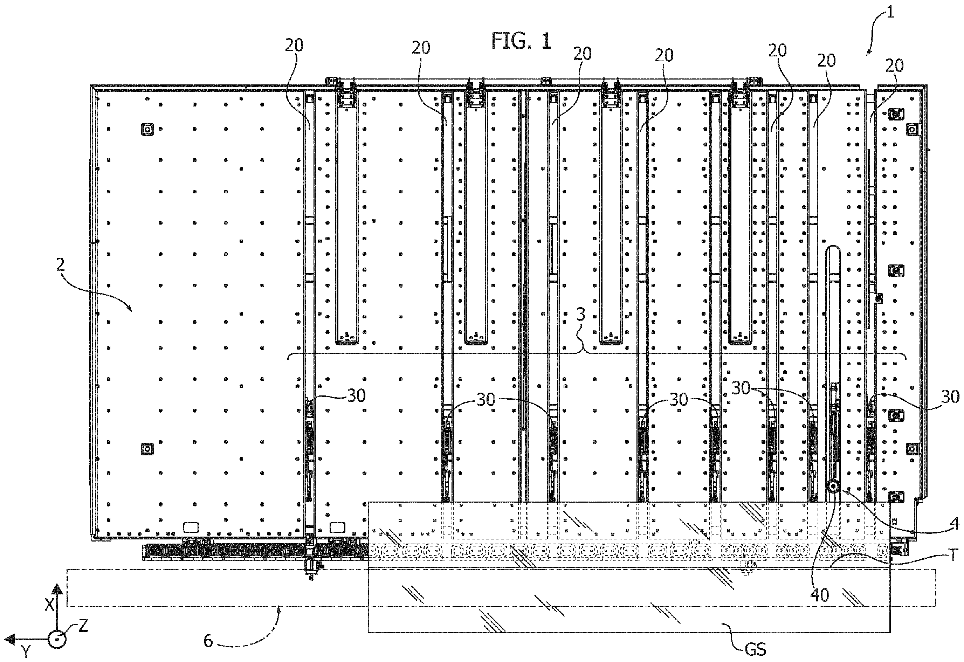

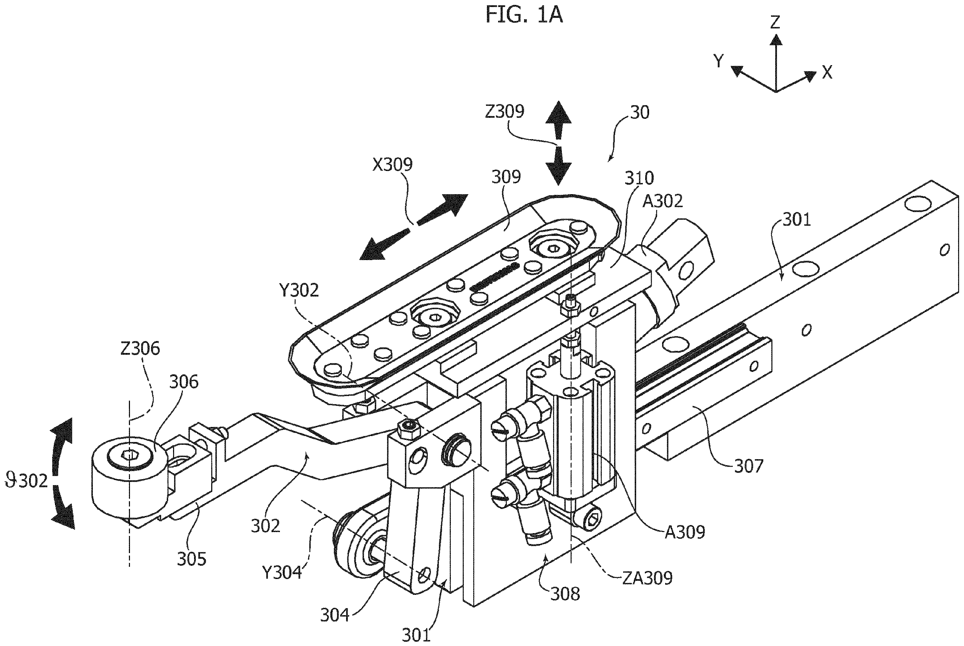

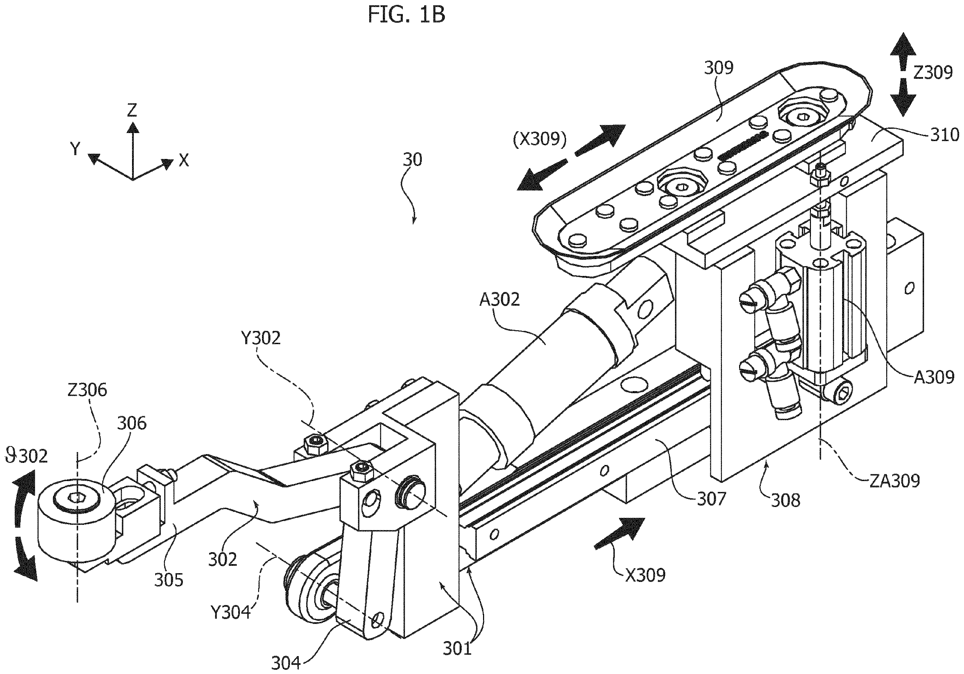

With reference to figure 1, a glass sheet cutting machine according to the invention is indicated as a whole by the reference number 1. As anticipated, the representation of the machine in the attached figures envisages that some of the parts be represented in a schematic fashion or be omitted for a better clarity of illustration.

The machine 1 includes a working plane 2, a measure bridge 3, a unit for the rotation of cut glass sheets 4 and a cutting bridge 6, herein represented in phantom line and in a schematic fashion. The other components of the machine 1, such as for example an electronic control unit with a human-machine interface and a possible feeding devices of glass sheets are not described and illustrated in detail herein in so far as they are per se known.

In each figure it is furthermore represented an orthogonal cartesian triad X, Y, Z for which the following correspondence applies:
- X direction: longitudinal (for example the direction of advancement of the sheets)
- Y direction: transversal (for example direction of the cutting line)
- Z direction: vertical.

Whenever in the present description geometrical axes where to be indicated (rotation, development, etc.) by a reference including the letter X, Y or Z followed by a number, the choice of the letter has to be intended as identifying the orientation of the axes with respect to the above cartesian triad. Furthermore, in the present description, the adverbs "longitudinally", "transversally" and "vertically" are always used with reference to the direction X, Y, Z above, be they referred to the machine, to the measure bridge or else to the mobile assembly thereof (see further).

With reference to figures 1, 1A, 1B, the measure bridge 3 includes a plurality of mobile assembly 30 slidably mounted in the longitudinal direction X within slots 20 of the working plane 2 and arranged spaced in a progressively increasing manner in the transverse direction Y to adapt to the transverse dimension more common for blank glass sheets to be cut.

With reference to figure 1A, each mobile assembly 30 includes a support frame 301, in particular a metal profile having an "L" shape, or a pair of metal profiles fixed to one another according to an "L" geometry, to which a rocker 302 is articulated.

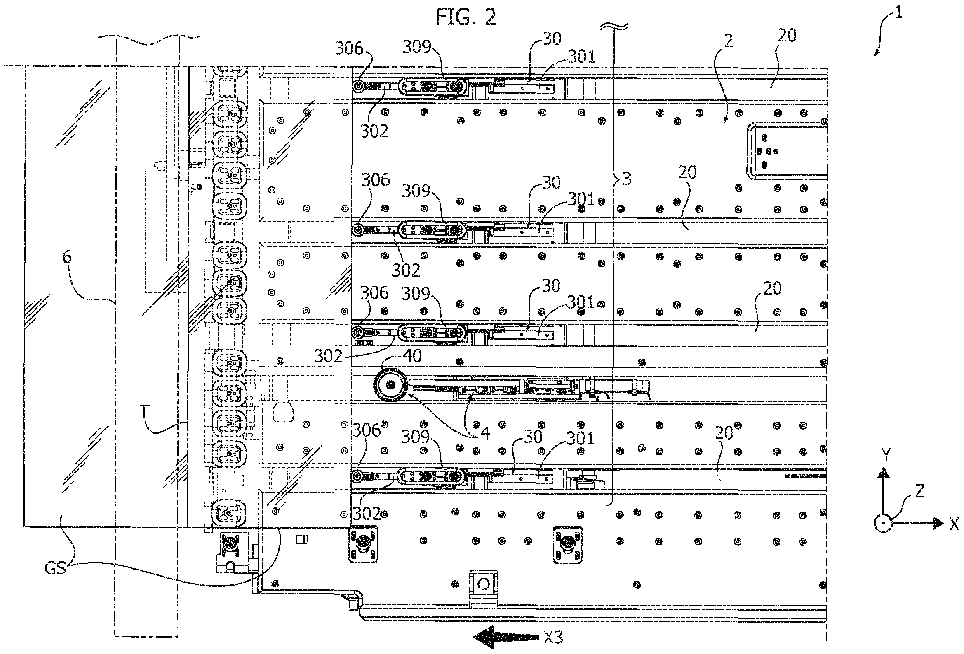

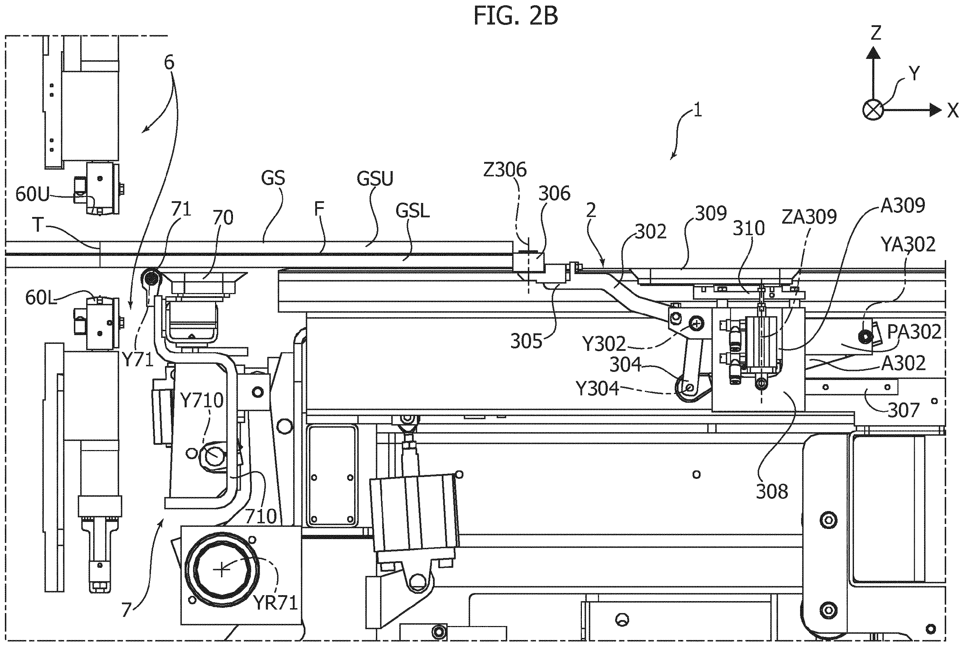

The rocker 302 is hinged to the frame 301 around a hinge axis Y 302, which is transversal. The rocker 302 is itself shaped substantially as an "L" and includes a first end 304 hinged around an axis Y304 to a first end of a linear actuator A302, the second end of which is hinged to a plate PA302 fixed to the support frame 301 (see figure 2B) around an axis YA302.

The rocker 302 further includes a second end 305 in correspondence of which an abutment element 306 is mounted, particularly a roller rotatable around the vertical axis Z306.

A linear guide 307 is furthermore fixed to the frame 301 and arranged along a longitudinal direction X - which corresponds to the direction of advancement of the glass sheet GS along the plane 2 - on which a slider 308 is slidably engaged. The slider 308 carries a suction cup 309, which has an elongated shape in the direction X so as to maximize the gripping area yet remaining within the dimensional limits set by the width of the slots 20, into which the suction cup 309 is intended to operate.

More in detail, the suction cup 309 is mounted on a support plate 310 which, in turn, is slidably mounted with respect to the slider 308 in the vertical direction Z. The plate 310 is operable along the same direction Z so as to determine a corresponding vertical displacement of the suction cup 309 in the direction Z309.

Such vertical displacement of the suction cup 309 is controlled, for example, by means of a fluid actuator (hydraulic or pneumatic) A309 of the linear type, having a first end fixed to the slider 308 and a second end fixed to the slider 310. The actuator A309 is thus configured to exert its action along an axis ZA309 parallel to the direction Z.

With reference to figures 1A, 1B, three are the movements available for the components for each mobile equipment 30.

In particular, a first movement is assigned to the rocker 302, which is operable in rotation around the axis Y302 by means of the actuator A302, which controls an oscillation θ302 thereof around the same axis (figures 1A, 1B).

A second movement is assigned to the ensemble of slider 308, a suction cup 309 and a support plate 310, which are instead longitudinally movable along the linear guide 307 by means of a motor unit (not shown in the figure), for example a linear electromagnetic motor or a motor-reducer unit with screw and nut transmission.

Such second movement, indicated by the reference X309 in figure 1A, 1B allows to vary the position of the suction cup 309, which constitutes a coupling element of the mobile assembly 30, with respect to the abutment element 306 in the longitudinal direction X.

A third movement is assigned to the sole suction cup 309, which is movable along the vertical direction Z309 according to the modality previously described.

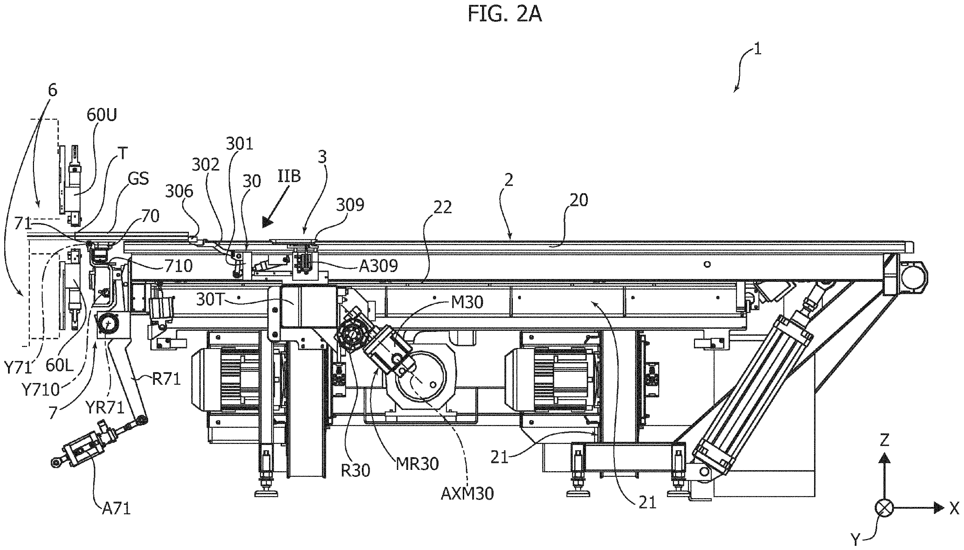

With reference to figure 2A, the working plane 2 is carried by a support frame 21, including a plurality of longitudinal guides 22 on which the mobile assemblies 30 of the measure bridge 3 are slidably mounted in the longitudinal direction X. All the mobile assemblies 30 are rigidly mounted one with respect to the other and connected to a sole transverse member 30T slidably mounted on the guides 22 and motored with respect thereto by way of a motor-reducer unit MR30, including a motor M30 having an axis of rotation AXM30 and configured to transmit motion to a screw reducer R30, which in turn drives the final transmission that imparts the motion to the transverse member 30T with respect to the support frame, thereby displacing accordingly all the mobile assemblies 30.

In figure 1 the rotation unit 4 includes a suction cup 40 longitudinally movable in a slot 20 of the working plane 2, which is configured to engage a cut glass sheet and to cooperate with a second suction cup mounted on the lower carriage 60L (also part of the rotation unit but not visible in the figures) movable parallel to the cutting line T to provide the rotation of the sheet in accordance to what disclosed in EP 2 845 840 A1 in the name of the same Applicant. Anyway, such a unit is per se optional: other systems for the rotation of the sheets may be envisaged whenever necessary.

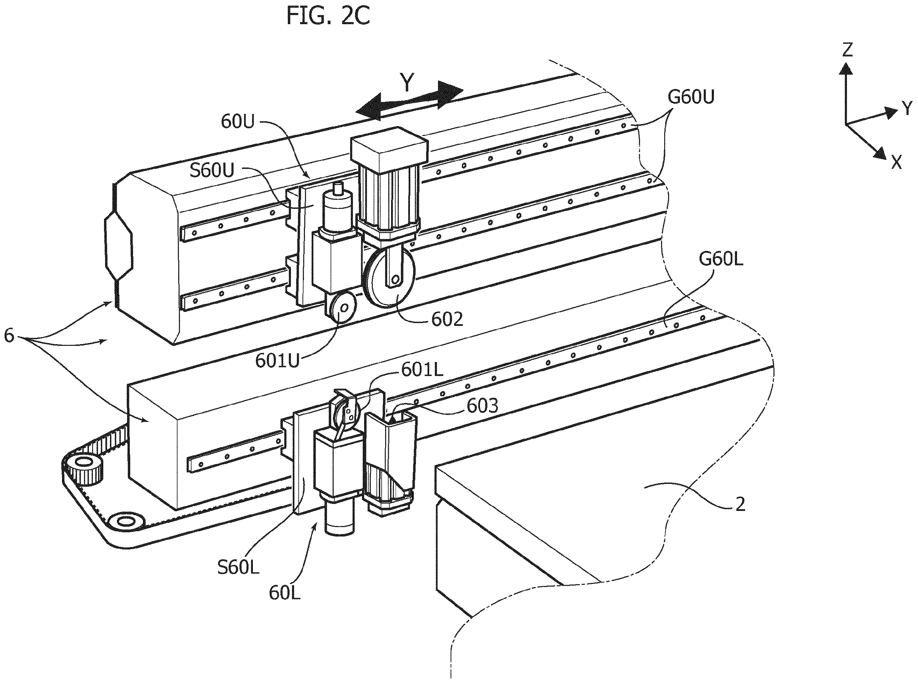

Again with reference to figure 2A, the cutting bridge 6 is arranged astride of the working plane 2 and includes, in a manner per se known, an upper toolset 60U and a lower toolset 60L, wherein each toolset 60U, 60L includes a corresponding cutting tool movable in the transverse direction Y along the cutting line of the machine 1 identified by the reference T. Further details of the cutting bridge 6 and of the equipments that constitute the latter are visible for example in figure 2C, wherein the features of some of the tools present in the set are shown in detail.

In particular, the upper set 60U includes, as glass cutting tools, a first incision wheel tool 601U, which is arranged side by side with respect to a pressure roller 602.

The tool 601U and the pressure roller 602 are both movable along the axis Z and are furthermore mounted on a slide S60U slidable in a transverse direction Y along a pair of parallel guides G60U, which therefore provide the possibility of movement along the transverse direction Y. Such construction is however to be intended as purely exemplary and non limiting: other constructions, per se known, are possible.

As far as the lower set 60L is concerned, it includes, as glass cutting tools, a second incision wheel tool 601L in respect of which a trimming tool 603 is arranged side by side which is configured for cutting the film of polymer material (EVA - ethylene-vinyl acetate or PVB - polyvinyl butyral -) set between two sheets of laminated glass.

Similarly to the tools of the set 60U, also the tools 601L and 603 are vertically movable along the axis Z and are furthermore carried by a slide S60L which is slideable along a transversal guide G60L that provides therefore the possibility of movement along the transverse direction Y.

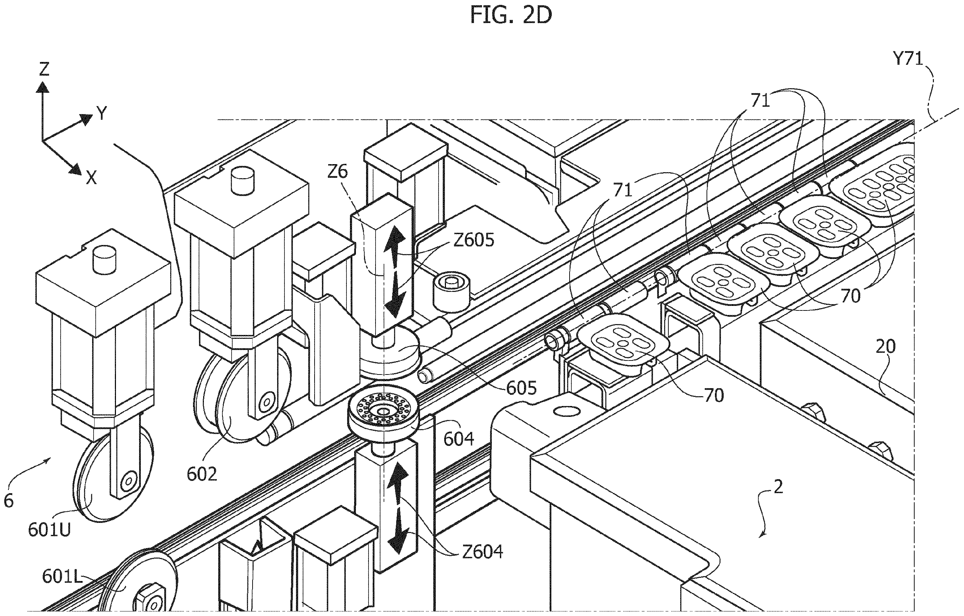

In a preferred embodiment, with particular reference to figure 2D, the cutting bridge of the machine 1 comprises a first engagement element consisting in a suction cup gripping element 604 (in the following, for brevity, "suction cup 604" or "lower suction cup 604"), and a second engagement member consisting in a cooperation member 605, also of the suction cup type (in the following, for brevity, "suction cup 605" or "upper suction cup 605"). The element 604, 605 are respectively carried by the aforementioned lower toolset 60L and upper toolset 60U, or they are anyway coupled thereto.

In particular, the suction cup 604 and 605 are carried by a respective carriage movable along the bridge 6 in the Y direction (that is to say, along the cutting line T) thanks to actuator means of the movement of the carriages not visible in the figures. The suction cups 604, 605 are arranged coaxial to one another and are mounted freely rotatable around the vertical axis Z6 (which provides also the corresponding longitudinal axis thereof). The suction cup 604 and 605 are further communicating with a negative pressure source not shown in the drawings.

The lower suction cup 604 is configured to engage the lower face of the sheet GS (or better GS', as will be shown) adjacent to a trailing edge thereof (that is to say, an edge that is generated after the cut of the sheet GS along the cutting line, in addition to the leading edge that precedes in the direction of advancement), while upper suction cup 605 is configured to engage the upper face of the sheet GS (GS'): to this end the carriage bearing each suction cup is also displaceable in the vertical direction (orthogonal, therefore to the transverse direction Y) Z604, Z605 so as to provide a displacement of each suction cup 604, 605 along the vertical axis Z6 between a position of engagement of the sheet GS (GS') and a position spaced from the sheet (resting position).

Owing to the positioning thereof on the bridge 6, the resting position corresponds to a lowered position for the suction cup 604 and a raised position for the suction cup 605, while the engagement position corresponds to a raised position for the suction cup 604 and a lowered position for the suction cup 605.

In an alternative embodiment, not shown in the figures, a co-operation member 605 may be used which is configured to act in conjunction with the suction cup 604 and adapted to engage the face of the sheet L opposite to that engaged by the suction cup element 604.

The element 605 may be provided as a pusher member adapted to push the sheet L against the suction cup element 604 that engages the opposite face of the sheet GS (GS').

The actuator means of the axial displacement of the suction cup 604 and the actuator means of the axial displacement of the cooperation element 605 (or the suction cup 605) are chosen between a hydraulic actuator, a pneumatic actuator, an electro mechanical actuator comprising an electric motor and the screw and nut system controlled by the electric motor.

Anyway, the construction of the bridge 6 is to be deemed purely exemplary and susceptible of modifications. The operation along the guides G60U and G60L may be provided by any driveline of the known type, for example a belt drive, a chain drive, or by means of gear wheels. The operation along the axis Z is instead provided on board the slides S60U and S60L in a manner per se known.

Note however that the suction cup 604 (and, when present - the suction cup/cooperation member 605) operates jointly to the rotation unit 4 and to the suction cup 40 to carry out the rotation of the glass sheet according to what described in EP 2 845 840 A1 mentioned above. Furthermore, if equipped with an angular position transducer (or in general associated to whatever system that allows to calculate the angle rotation around its axis), the suction cup 604 may allow to carry out a further method of rotation according to what described in Italian patent application No. TO2015A000107 in the name of the same Applicant, and still secret at the time of filing of the present application.

In a side by side position with respect to the cutting bridge 6, downstream of the cutting line itself, a breaking unit 7 for the glass sheets is provided. As a note, the terms "upstream" and "downstream" in the present description are used with reference to the direction of advancement X and to the destination of advancement of the sheet GS along the working plane 2, that goes from left to right in all of the figures, that is from the cutting line T up to the end of the working plane 2. With reference to the cutting line, the term "upstream" designates a position preceding the cutting line in the direction of advancement of the sheets, while "downstream" designates a position that follows the cutting line in the direction of advancement of the sheets.

Again in figure 2A, the breaking unit 7 is configured to cooperate with the cutting unit 6 during the cutting and breaking cycle of the sheet GS and includes a plurality of suction cups 70 aligned along the transversal direction Y to which a plurality of roller 71 rotatable around the transversal axis Y71 is set side by side (in the X direction). Both the rollers 71, and the suction cup 70 are vertically movable along the axis Z and cooperate with the cutting bridge 6 in a cutting and breaking process of the laminated glass sheet according to the modalities described in European patent EP 2 177 482 B1 in the name of the same Applicant.

In a preferred embodiment, the vertical motion of the suction cup is entrusted to corresponding linear actuators coupled to the suction cup themselves, while the vertical movement of the rollers, which raises the glass sheet during the cutting and breaking process described in EP 2 177 482 B1, is provided by means of a linear actuator A71 that controls a rocker R71 in rotation around an axis YR71 having a transverse orientation. The opposite end of the rocker is connected to a support frame 710 of the roller 71 which is in turn articulated around a transverse axis Y710.

A method for cutting and displacing a glass sheet along a working plane 2 according to the present invention will now be described. The method is described herein with particular reference to the machine 1, but it should be borne in mind that it can be practised on any glass cutting machine provided with a measure bridge, in so far as - as it will be seen - the method is carried out primarily thanks to the mobile assemblies 30 of the measure bridge 3. This means, in particular, that a method according to the invention and the measure bridge 3 including the mobile assemblies 30 may be provided both on glass cutting machine having asymmetrical structure and operation and open structure downstream of the cutting line - as the machine 1 - , and on traditional type machines having a symmetrical structure and symmetrical operation and symmetrical actions of the type already known earlier than the asymmetrical machines such as the machine 1.

With reference to figure 1, the method according to the invention comprisesg a first step of advancement of the glass sheet GS (to be subject to cutting operation) along the working plane 2. In the figures attached to the present application a laminated glass sheet GS is illustrated purely by way of non limiting example, which includes an upper glass sheet GSU, a lower glass sheet GSL and a polymer material film F, for example made of polyvinyl butyral (PVB) or ethylene-vinyl acetate (EVA).

With reference to figure 2, the sheet GS is made to advance on the working plane 2 by a feeder arranged upstream of the working plane itself. In some embodiments, it is possible to envisage a manual feeding of the sheet GS.

The precise positioning of the glass sheet GS with respect to the cutting line T is instead carried out within the framework of the second step of positioning of the glass sheet in a desired manner with respect to the cutting line T of the machine 1, that is carried out with aid of the measure bridge 3.

To this end, the rockers 302 of the measure bridge 3 (figure 2A, 2B) are rotated (or are already positioned) in the raised position, that determines a location of the abutment element 306 in a protruding position above the working plane 2.

Preferably the measure bridge 3 is positioned with respect to the working plane 2 such that the abutment surfaces of the element 306 are already in a position corresponding to the desired location of the leading edge of the sheet GS on the working plane 2. In other words, when the sheet is fed to the measure bridge, it is blocked by abutment on the elements 306 of the measure bridge; when the positioning is deemed sub-optimal, is possible to control a small adjustment of the position by means of displacement of the measure bridge 3 in the direction X3 with the aim of bringing the sheet GS to a position such as to reach the desired cutting length, that is a position wherein the desired cutting line on the sheet GS comes to coincide with the cutting line T of the machine 1.

As a further note, by the term "leading edge" it is meant to designate an edge of the sheet GS or of a fraction thereof (when referred to a portion of sheet just cut) that is located in the first position along the direction of advancement. On the contrary, an edge that follows the leading edge in the direction of advancement will be defined as "trailing edge" - both with respect to the sheet GS, and with respect to a fraction thereof just cut (for the portion of sheet GS just cut, the so called "transverses", the trailing edge coincides with the edge just created by the cutting operation).

The suction cups 309 of the mobile assemblies 30 during the steps first and second are instead maintained slightly below the working plane 2 (or, on the limit, flush with the working plane 2), in particular in a position that ultimately results below of the lower sheet GSL. For this reason, the operating condition of figure 2, 2A may be defined as "below-plane low-suction cups".

Furthermore, during the first and the second steps the air cushion of the working plane 2 is kept in activation condition to facilitate the handling of the sheet GS on the working plane 2 itself.

Once the sheet GS has been correctly positioned, the air cushion is deactivated and a third step is triggered that includes the cutting of the sheet along the cutting line T and the breaking of the same. The cutting and the breaking of the sheet in the machine 1 are made exactly as described in a EP 2 177 482 B1.

During the cutting step the air cushion is in a deactivation condition for the reasons listed previously: it would not be possible, otherwise, to ensure a correct positioning of the sheet.

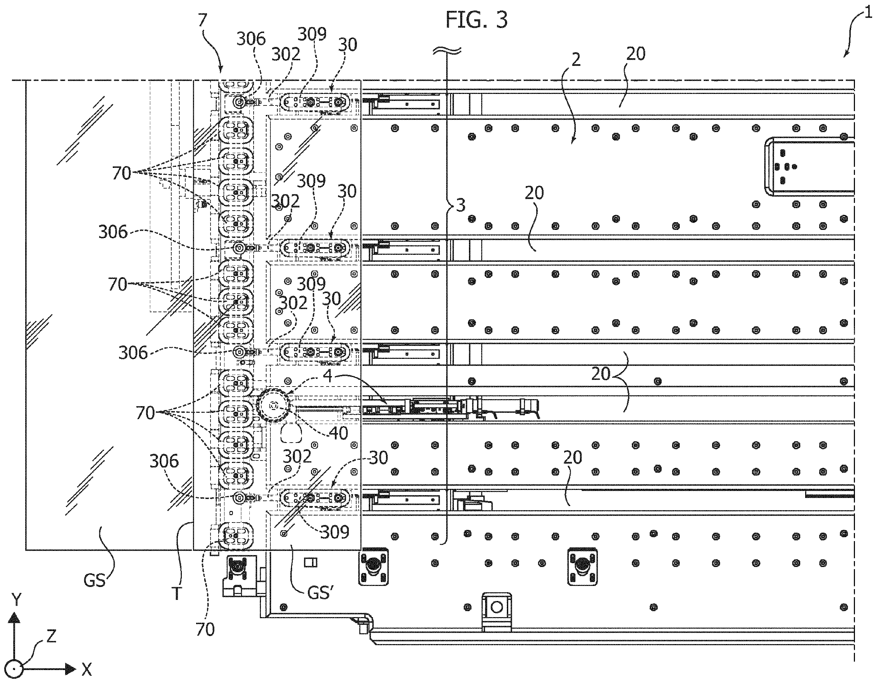

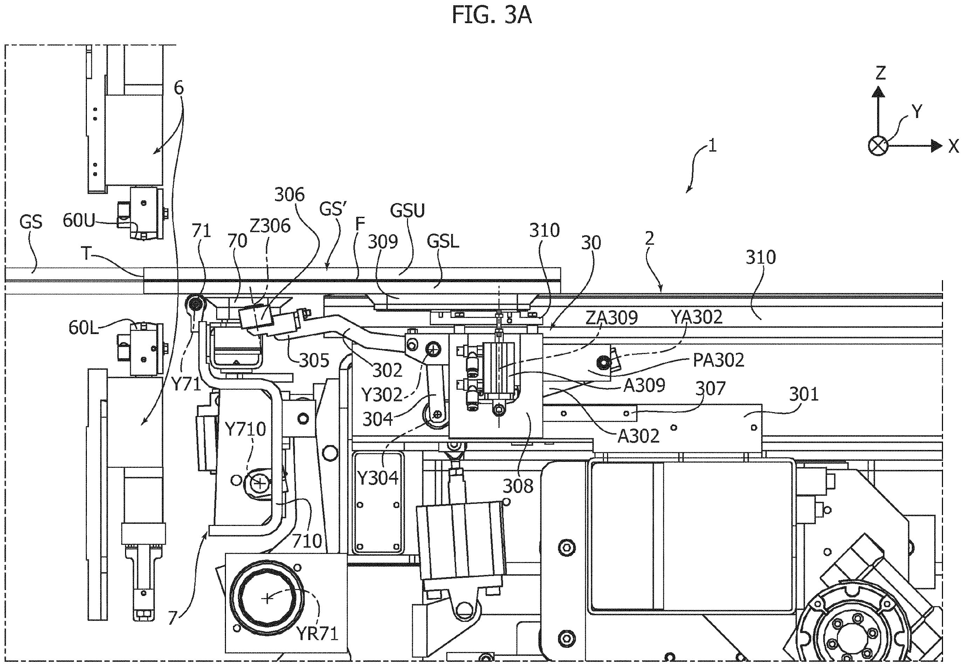

Subsequently with respect to the third step of cutting (or - in alternative - at the same time, depending on the embodiment and the needs), the method according to the invention envisages a fourth step of displacement of the abutment elements 306 below the working plane 2, with integral displacement of the mobile assemblies 30 of the measure bridge 3 below the working plane and below the lower face of the sheet GSL as visible in figure 3.

Particularly, the bridge 3 is controlled so as to displace all the abutment elements 306 and all the suction cups 309 below the sheet GS. It should be noted that such operation is possible at the condition that, preliminary to the subduction of the mobile assemblies 30 with respect to the sheet GSL, a rotation of the rocker 302 of each mobile assembly 30 towards the corresponding lowered position has been controlled, in particular a rotation in a direction θ302 that - in the representation of figures 1A and 1B - is counterclockwise. Such a rotation is controlled by retraction of the stem of the actuator A302 by means of a command output by the control unit of the machine 1.

Once the cut is completed, the method according to the invention envisages a fifth step of engagement of the cut sheet, now indicated in the figures by the reference GS' (for uniformity, the upper and lower sheets and the polymer film of the sheet GS' are indicated by the references GSU', GSL' and F' to distinguish it from the remainder of the sheet GS that is still in a single piece) by means of one or more coupling elements provided on the measure bridge 3. In particular, in the embodiment of the mobile assemblies 30 illustrated and described herein, such coupling element correspond to the suction cup 309 of each mobile assembly.

To this end, each suction cup 309 is in fluid communication with a vacuum source so as to exert a suction action on the lower face of the cut glass sheet GS' (corresponding to the lower face of the sheet GSL, in particular the portion on the sheet GS').

The engagement of the suction cup 309 is controlled by bringing the suction cup themselves into contact with a lower surface of the sheet GS' thanks to the actuator A309 (thereby closing the small vertical gap existing and deriving from the need to provide the subduction of the mobile equipments 30), and activating the vacuum source. Not only that: the actuators A309 are controlled so as to provide a raising of the sheet GS' with respect to the working plane 2 by means of the suction cup 309.

To this end, the elongated shape in the longitudinal direction X of the suction cup 309 favours the stability of the sheet GS' during raising, minimizing or nullifying the pitch around the transverse axis Y. The raising of the sheet GS' with respect to the working plane 2 allows to observe, furthermore, that being the sheet GS' in a raised position it is not necessary to activate the air cushion on the working plane 2 for the displacement thereof, as will be described shortly.

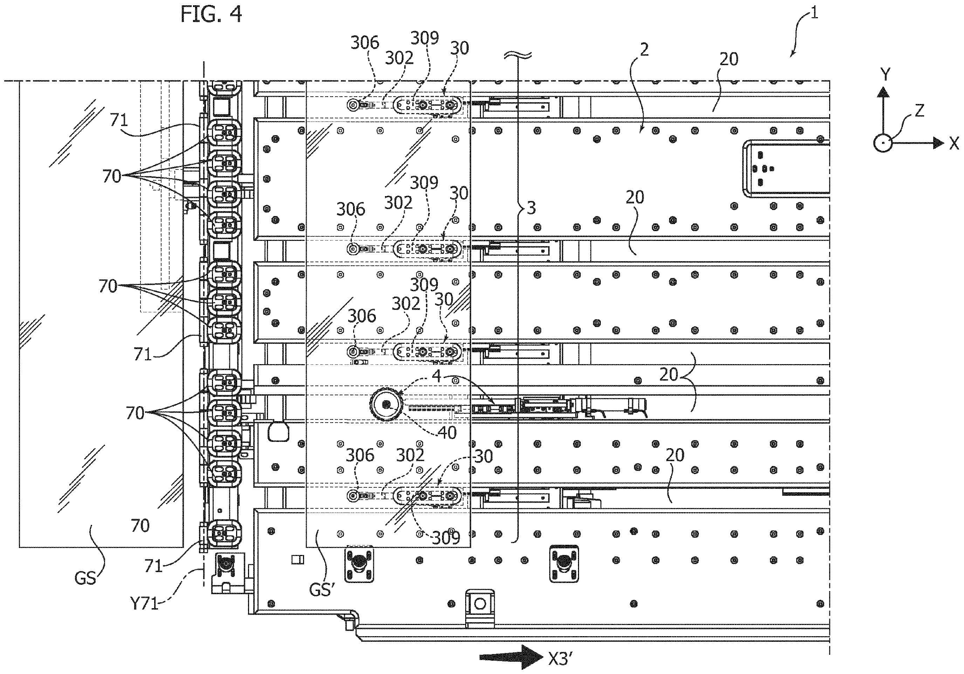

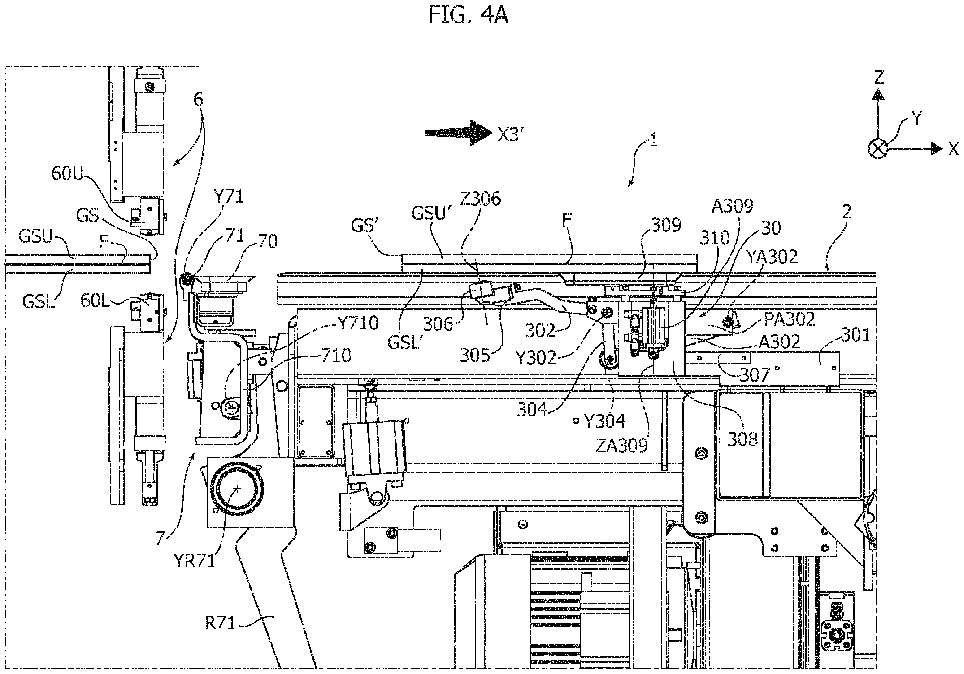

The engagement condition of the suction cup 309 on the lower face of the sheet GS' preliminary to the raising is shown in figure 3A. The raised condition of the sheet GS' is visible instead in figures 4, 4A wherein furthermore the entire measure bridge 3 has been displaced in the longitudinal direction heading in accordance with X3', opposite to the heading direction of X3, so as to make the cut sheet GS' depart from the cutting line. This departure is functional to the performance of the subsequent steps, and furthermore takes place without the aid of the air cushion on the working plane 2 thanks to the fact that the suction cups 309 support the sheet GS' above the plane 2 itself.

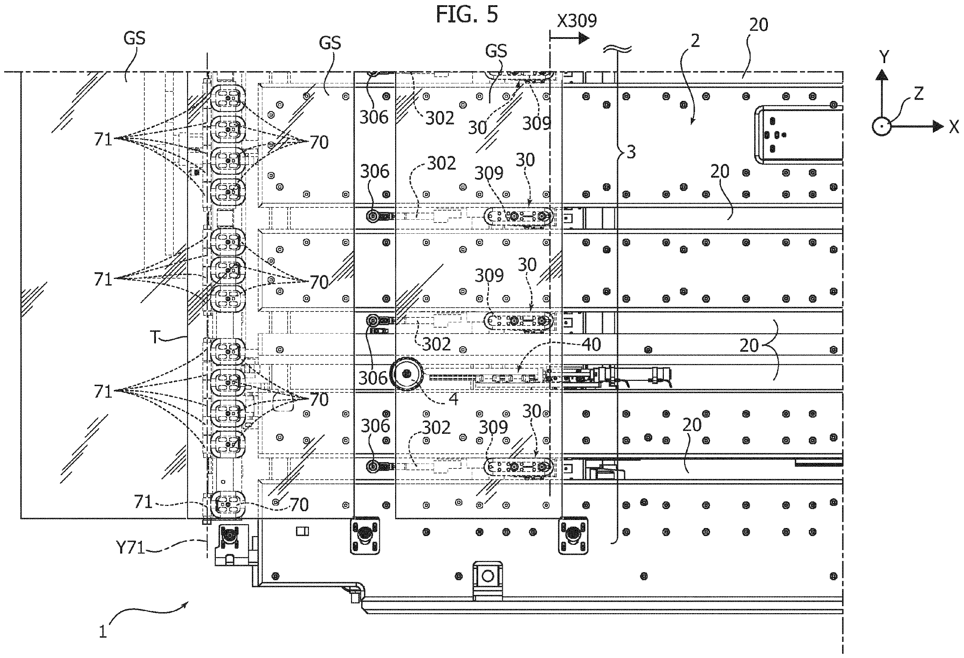

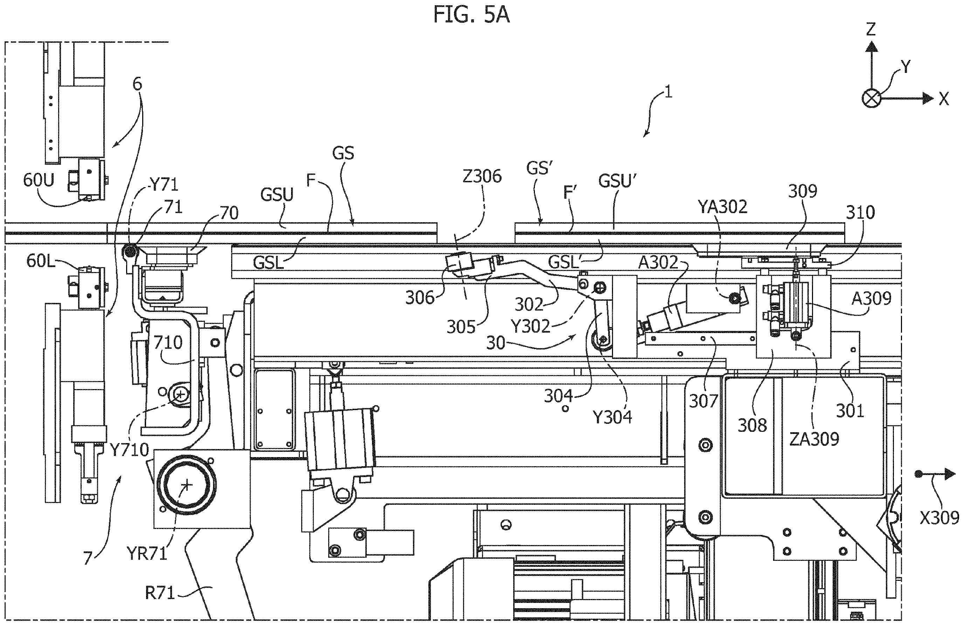

With reference to figures 5 and 5A, a sixth step of the method according to the invention follows to the operation of displacement of the sheet GS' in the direction and heading in accordance with X3', which consists in the impression of a relative motion between the cut glass sheet GS' and the abutment element 306 in the longitudinal direction X309, so as to uncover the abutment elements 306 previously below the cut glass sheet GS'.

More in detail, a movement in the longitudinal direction X309 is imparted to the sheet GS', wherein such movement takes place with respect to the abutment elements 306, so as to uncover the abutment elements 306 previously covered by the sheet GS' itself.

To this end, contrary to the movement X3', the movement X309 does not involve the entire measure bridge 3, but specifically involves each mobile assembly 30, and in particular the suction cup 309 thereof. The suction cups 309 are translated along the guides 307 thanks to the slider 308 driven until the position of figure 1B is reached.

In particular, up to the sixth step of the method (condition of figures 4, 4A) all the mobile assemblies 30 of the measure bridge 3 are maintained in the operating position of figure 1A, wherein the longitudinal distance between the suction cup 309 and the abutment element 306 is minimum (or reduced).

Strictly speaking, the man skilled in the art will appreciate that compared to the condition shown in figure 1A, the actual configuration of the mobile assemblies 30 may vary as far as the angular position of the rockers 302 is concerned (raised or lowered according to the needs).

On the contrary, in the condition shown in figure 5, 5A, 6, 6A, 7, 7A each mobile assembly is in the condition shown in figure 1B, wherein the suction cup 309 underwent a displacement in the longitudinal direction along the guide 307 and the longitudinal distance between the suction cup 309 and the abutment elements 307 is maximum (or increased with respect to the condition of figure 1).

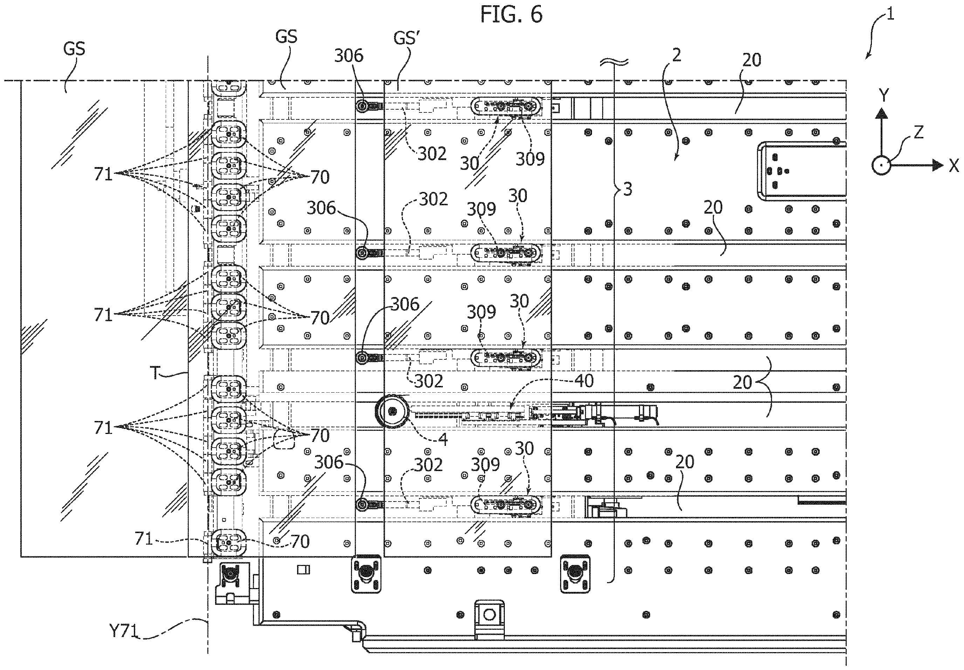

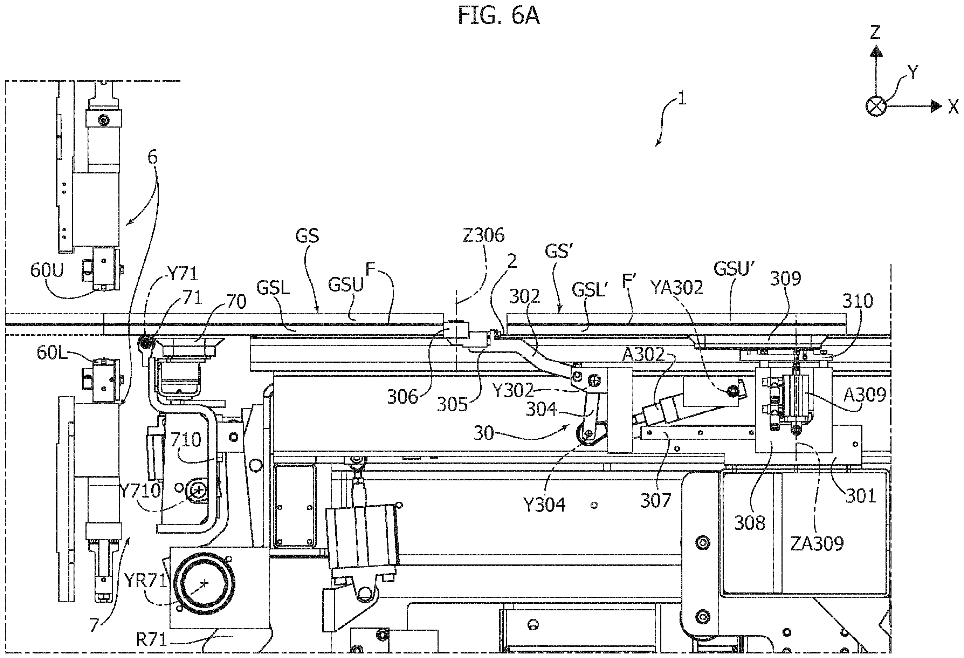

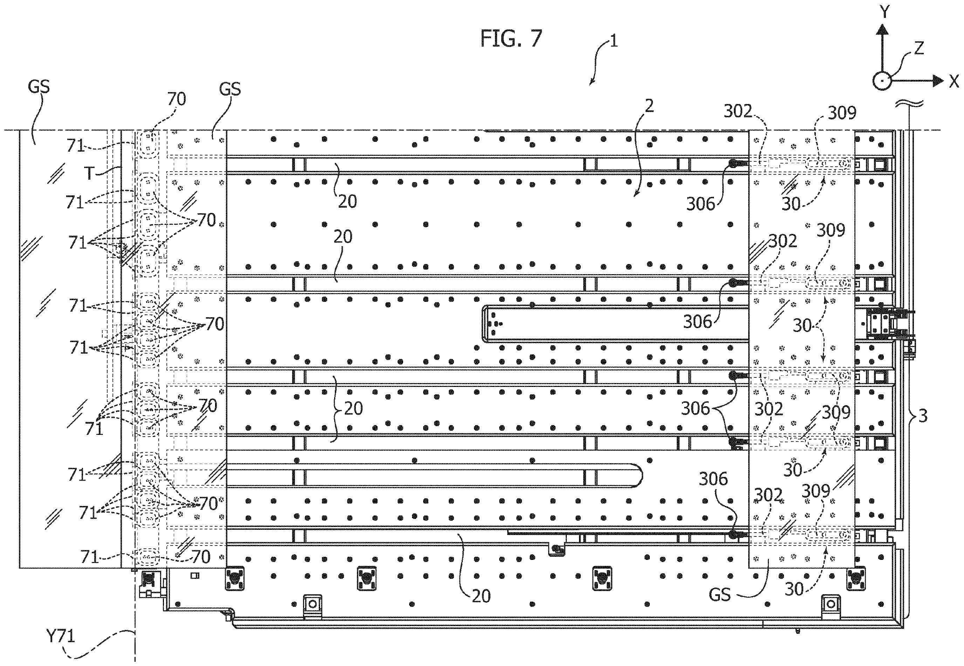

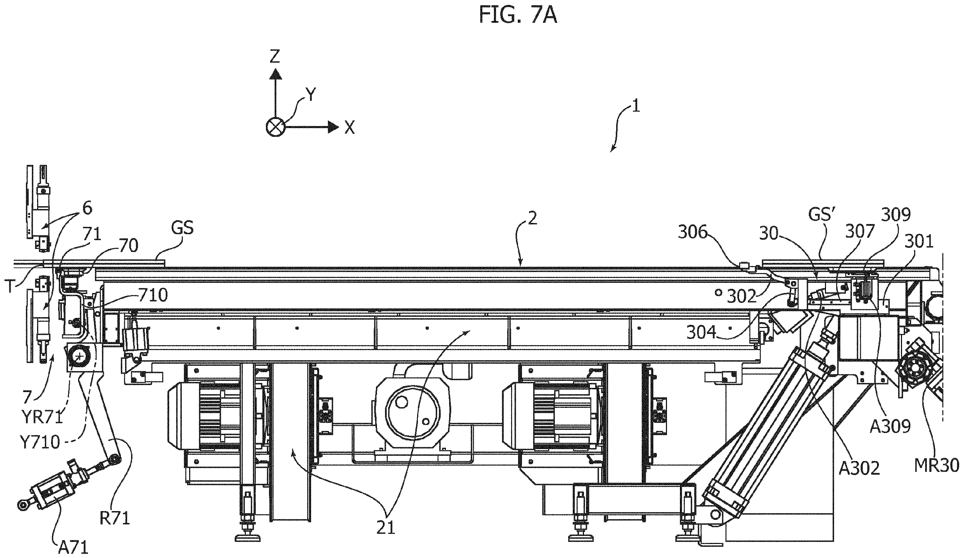

Of course, the man skilled in the art will appreciate how in the condition of figure 5, 5A the rockers 302 are still rotated in a position such that the abutment elements 306 are below the working plane 2, while in figures 6, 6A and 7, 7A they are actually in the condition shown in figure 1B.

A seventh step of the method according to the invention follows to the above, the result of which is shown in figure 6 and 6A, and corresponds to a displacement of the abutment element 306 above the working plane 2 so that they are ready to come into contact with the new leading edge of the sheet GS and that has to undergo further cutting operations. This contact condition is well visible in figures 6, 6A in particularly represents the results of further steps of the method according to the invention that will now be described.

In particular, the method goes on with an eighth step that consists in a repetition of the first step, wherein however a glass sheet GS is fed already reduced by the portion corresponding to the sheet GS'. To this follows a ninth step that consists in a repetition of the second step, with the difference - however - lying in the fact that it is the reduced sheet GS that is positioned in a desired manner with respect to the cutting line T with the assistance of the measure bridge 3.

To this end, it should be observed that immediately following the backwards movement of the sheet GS' with respect to the abutment elements 306, the latter are brought in a protruding position with respect to the working plane 2 by means of raising of the rocker 302 and the entire measure bridge - that however carries with it the sheet GS' - may thus be positioned so as to define an abutment for the correct position of the sheet GS (reduced) that is fed meanwhile, exactly as provided for in the second step. The air cushion on the working plane 2 may be temporarily activated for allowing the feeding of the reduced sheet GS and the positioning of the same.

To the above then follows a tenth step that consists in a repetition of the third step (cutting of the sheet), during which - however - the measure bridge 3 that carries the sheet GS' attached thereto is displaced in the longitudinal direction along the working plane 2 with the mobile assemblies in the condition shown in figure 1B so as to bring the cut sheet GS' in a position of unloading from the machine, for example at the end (far right in the figures) of the working plane 2.

Downstream of the tenth step also the steps fourth to seventh are thus repeated. This means, ultimately, that after the seventh step the method envisages a cyclic repetition of the steps first to seventh, wherein:
- during the repetition of the second step of the method the measure bridge 3 assists in the positioning of the glass sheet GS by means of the abutment elements 306 and at the same time holds the glass sheet GS' cut during the first step of the previous cycle, and
- during the repetition of the third step of the method the measure bridge 3 is displaced longitudinally along the working plane 2 so as to bring the cut sheet in an unloading position of the machine 1, while the sheet GS undergoes normal cutting and breaking operation.

The final condition (and of the tenth step, that is contemporariness of cutting of the sheet GS and unloading of the sheet GS') of the method according to the invention is then depicted in figures 7 and 7A, wherein it can be observed that the sheet GS is subject to a new cutting operation while the sheet GS' is completely at the end of the working plane 2 carried by the mobile assemblies 30 of the measure bridge 3.

During the repetition of the steps second and third, the actions on the cut sheet GS' overlap the action on the sheet GS, in particularly the actions necessary to bring the sheet GS' at the end of the plane 2.

In other words, a contemporariness is achieved between the cutting operations of the remaining blank glass sheet and the unloading operation of the glass sheet ("transverse") just cut. This is made possible thanks to the mobile assemblies 30 for at least the following reasons:
- the suction cup 309 of each mobile assembly 30 is slidable in a longitudinal direction X with respect to the corresponding abutment element 306, and is furthermore capable of holding the sheet GS' just cut during such a relative movement. This allows to bring the entire measure bridge below the sheet GS (before cut) that becomes GS' after cut, and to uncover the abutment element 306 as soon as the sheet GS' has been made to depart by a sufficient distance with respect to the cutting line T, so as to make available the abutment elements for the subsequent step of positioning of the new portion of sheet GS that has to be subject to a cutting operation. In other words, the measure bridge is made immediately available, and precisely in correspondence of step of the working cycle where it is necessary.
- The suction cup 309 allow to displace the sheet GS' by maintaining it raised with respect to the working plane 2, thereby rendering superfluous the action of the air cushion. For this reason, the cutting operation of a new portion of the sheet GS may be performed contemporarily to the translation to the end of the line of the sheet GS' just cut because the raising of the sheet GS' makes the actuation of the air cushion of the working plane 2 superfluous, which can therefore be deactivated thereby allowing the performance of the cutting operations.

In alternative embodiments, the raising of the sheet GS' with respect to the working plane 2 may be provided - tolerating a constructional complication of the machine 1 - for example by means of one or more arrays of idle rollers or balls retractable from the plane 2, that would be extracted only upon the movement of the sheet GS' towards the end of the plane 2 for unloading thereof.

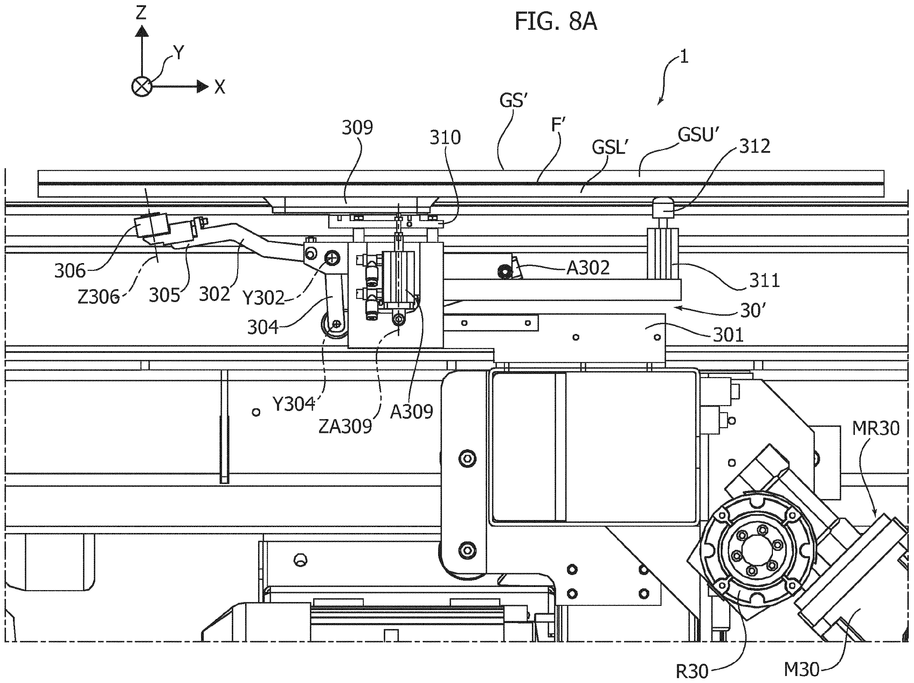

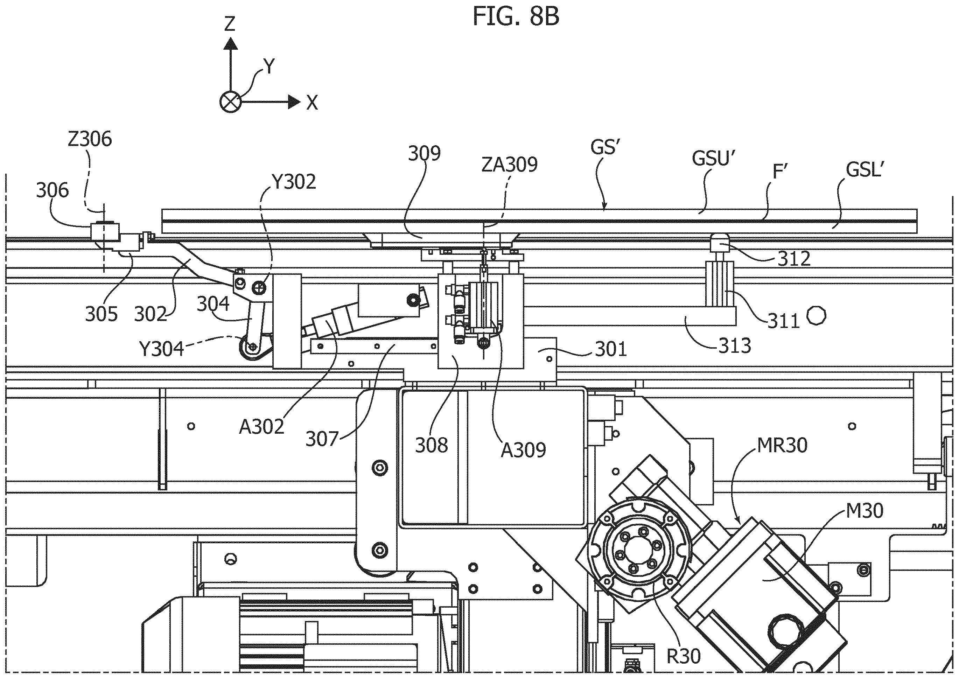

It should furthermore be observed that the measure bridge 3 according to the invention may be made substantially universal with respect to the different cutting ends possibly required for the sheet GS'. This is possible simply by engaging the suction cup 309 at a point such that the translation of the slider 308 anyway results in the uncovering of the abutment element 306. In other words, the distance between the upstream end of the suction cup 309 and the trailing edge of the sheet GS' has to be chosen so as to remain within a limit value that allows the uncovering thereof. The dimensioning of the mobile assemblies 30 and the travel of the slider 308 is made such as to cover a sufficiently wide range of cutting lengths, however with exceptional cutting lengths the observance of the above condition concerning the distance may lead to have a portion of the sheet GS' arranged in a cantilevered fashion downstream of the suction cup 309 having a length and a mass too high to remain in equilibrium on the suction cup 309 alone. To this end, it is possible to envisage a variant of the measure bridge - indicated by the reference 30' - that is the subject of figures 8A, 8B.

With reference to figures 8A and 8B, the bridge 30' differs from the bridge 30 in the arrangement of a further linear actuator 311 having a vertical axis and carrying a pad 312 at the end of the respective stem. The actuator 311 is mounted at the free end of an extension 313 that extends in a cantilevered fashion with respect to the frame 301 in the longitudinal direction. Furthermore, the extension 313 extends on an opposite side of the suction cup 309 with respect to the rockers 302, that is to say in correspondence of the area wherein a sheet GS' having a high cutting length would be located in a cantilevered fashion with respect to the suction cup 309.

In this way, it will be appreciated, the sheet GS' may rely on two abutment points, the first constituted by the suction cup 309, the second by the pad 312. For the rest, the structure of the bridge 30' and the operation thereof are exactly identical to the bridge 30: for this reason the parts indicated by the same reference number already used for the bridge 30 have to be deemed identical and serving the same function. As the sole functional difference, on the mobile assembly 30' it is preferably provided a synchronous driving of the actuators 309 and 311 so as to maintain the sheet GS' as much as possible in equilibrium condition.

The man skilled in the art will thus appreciate that thanks to the method, the mobile assemblies 30, 30', the measure bridge 3 and the machine 1 according to the invention it is possible to nullify the inactivity time of the machine due to the unloading of the sheet GS' during the cutting cycle of the glass sheets, simply because the unloading step of the glass sheet GS' is performed contemporarily to the cutting step of the subsequent portion of sheet GS, thus developing substantially along a time interval "hidden" by the cutting step itself. This is possible, as seen, thanks to the fact that the displacement of the sheet GS' is provided such that it does not require the activation of the air cushion on the working plane 2 (here thanks to the raising by means of the suction cup 309, in alternative embodiments - for example - by means of retractable idle rollers or balls), and thanks to the movement of the sheet GS' and the longitudinal direction X3' owing to the movement in the direction X309 of the suction cup 309, wherein such movement occurs with respect to the abutment element 306 thereby uncovering the latter to start the step of desired positioning (according to size) of the sheet GS.

Of course, The constructional details and the embodiments may be widely varied with respect to what described and illustrated herein without by this departing from the scope of the invention, as defined by the appended claims.

For example, in a variant the measure bridge 3 may envisage one single coupling element, for example provided as a tong or clamp on a single one of the mobile assemblies. The afore mentioned tong or clamp may be mounted on an oscillating element similar to the rocker 302 mounted on the slider 308, and may engage the leading edge of the sheet GS' as soon as the cutting operation is over or during the cutting operation itself. On the other mobile assemblies, pad/actuator units similar to the pad 312/actuator 311 units that raise the sheet GS while this is held firmly by the tong or clamp may be provided.

In yet a further variant it is possible to envisage a combination of coupling elements of the tong type and pad/actuator units on each of the mobile assemblies 30, 30' .

## Claims

1. A method for cutting and displacing a glass sheet (GS, GS') along a working plane (2) of a glass cutting machine (1), said glass cutting machine (1) comprising:
- a working plane (2),
- a measure bridge (3) movable along said working plane (2) in a longitudinal direction (X, X3, X3'), said measure bridge including a plurality of abutment members (306) for said glass sheet (GS) movable with said measure bridge in a longitudinal direction (X) and further displaceable between a position protruding above said working plane (2) and a position below said working plane (2), the measure bridge (3) further including one or more engagement members (309),
the method comprising the following steps:
- a first step of advancement along said working plane (2) of a glass sheet (GS) to be cut,
- a second step of positioning of said glass sheet (GS) to be cut in a desired manner with respect to a cutting line (T) of the machine (1) with the assistance of said measure bridge (3),
- a third step of cutting of said glass sheet (GS) along said cutting line (T) with obtainment of a cut glass sheet (GS'),
- a fourth step of displacement of said abutment members (306) below said working plane and displacement of the measure bridge (3) below said cut glass sheet (GS'),
- a fifth step of engagement of the cut glass sheet (GS') by means of one or more engagement members (309) provided on said measure bridge (3),
- a sixth step of impression of a relative movement between said cut glass sheet (GS') and said abutment members (306) in a longitudinal direction (X309) so as to uncover said abutment members (306) previously below the cut glass sheet (GS'),
- a seventh step of displacement of the abutment members above the working plane (2),
the method further including performing a repetition of each of the steps first to seventh, wherein:
- during the repetition of said second step the measure bridge (3) assists in the positioning of the glass sheet (GS) by means of said one or more abutment members (306) and holds the glass sheet (GS') cut during the third step,
- during the repetition of the third step the measure bridge (3) is displaced along said working plane (2) to bring said cut glass sheet (GS') in an unloading position from said machine (1).

2. The method according to claim 1, wherein said fifth step further includes raising said cut glass sheet (GS') with respect to said working plane (2).

3. The method according to claim 2, including raising the cut glass sheet (GS') with respect to said working plane by means of raising of said one or more engagement members (309) of the measure bridge (3).

4. The method according to claim 1, wherein said sixth step includes displacing said cut glass sheet (GS') with respect to said abutment members (306) by means of a displacement of said one or more engagement members (309) of said measure bridge (30, 30').

5. The method according to claim 1, wherein during the repetition of the third step an air cushion on said working plane (2) is kept in a deactivated condition.

6. A mobile assembly (30; 30') for a measure bridge (3) of a glass sheet (GS) cutting machine (1), the mobile assembly (30; 30') including:
- a support frame (301),
- an abutment member (306) for a glass sheet (GS) displaceable between a position above a working plane (2) of glass sheet cutting machine, and a position below said working plane (2),
the mobile assembly (30; 30') being **characterized in that** it further includes an engagement member (309) configured for engaging a cut glass sheet (GS') which is located on said working plane (2), said engagement member (309) being movable (307, 308) with respect to said abutment member (306) so as to vary a distance thereof along a longitudinal direction of the machine (1), said abutment member (306) and said engagement member (309) being fitted on said support frame (30).

7. The mobile assembly (30; 30') according to claim 6, further including a rocker (302) articulated to said support frame (301) and bearing said abutment member (306), said rocker (302) being displaceable between a raised position corresponding to the position of said abutment member (306) above a working plane (2) of a glass sheet cutting machine (1), and a lowered position, corresponding to the position of said abutment member (306) below said working plane (2).

8. The mobile assembly (30; 30') according to claim 6 or 7, wherein said engagement member is a suction cup (309) carried by a slider (308) longitudinally movable along said support frame (301) with respect to said abutment member (306).

9. The mobile assembly (30; 30') according to claim 8, wherein said suction cup (309) is mounted on said slider (308) in a slidable manner along a vertical direction (Z) and is further displaceable by means of linear actuator (A309) between a lowered position and a raised position.

10. The mobile assembly (30') according to any of claims 6 to 9, further including an extension (313) of said support frame (301) carrying at a free end thereof a pad (312) borne by a linear actuator (311), said pad (312) being displaceable by means of said linear actuator (311) between a lowered position and a raised position.

11. The mobile assembly (30; 30') according to claim 8, wherein said suction cup (309) is elongated in a longitudinal direction (X).

12. A measure bridge (3) for a glass sheet (GS) cutting machine (1) including a plurality of mobile assemblies (30; 30') according to any of claims 6 to 11.

13. A glass sheet cutting machine (1) including:
- a working plane (2),
- a cutting bridge (6), and
- a measure bridge (3) movable along a longitudinal direction (X) of the machine (1) and configured for assisting in the positioning of a glass sheet (GS) in a desired manner with respect to a cutting line (T) of the machine (1),
the machine (1) being **characterized in that** said measure bridge (3) includes a plurality of mobile assemblies (30; 30') according to any of claims 6 to 11.

## Patentansprüche

1. Verfahren zum Schneiden und Versetzen einer Glasscheibe (GS, GS') entlang einer Arbeitsebene (2) einer Glasschneidemaschine (1), wobei die Glasschneidemaschine (1) Folgendes umfasst:
- eine Arbeitsebene (2),
- eine in einer Längsrichtung (X, X3, X3') entlang der Arbeitsebene (2) bewegbare Messbrücke (3), wobei die Messbrücke eine Vielzahl von Anschlagelementen (306) für die Glasscheibe (GS) beinhaltet, die mit der Messbrücke in einer Längsrichtung (X) bewegbar und ferner zwischen einer über die Arbeitsebene (2) hinausstehenden Position und einer Position unterhalb der Arbeitsebene (2) versetzbar sind, wobei die Messbrücke (3) ferner ein oder mehrere Eingriffelemente (309) beinhaltet,
wobei das Verfahren die folgenden Schritte umfasst:
- einen ersten Schritt des Beförderns einer zu schneidenden Glasscheibe (GS) entlang der Arbeitsebene (2),
- einen zweiten Schritt des Positionierens der zu schneidenden Glasscheibe (GS) in einer gewünschten Weise in Bezug auf eine Schneidlinie (T) der Maschine (1) mit Unterstützung der Messbrücke (3),
- einen dritten Schritt des Schneidens der Glasscheibe (GS) entlang der Schneidlinie (T), wobei eine geschnittene Glasscheibe (GS') erhalten wird,
- einen vierten Schritt des Versetzens der Anschlagelemente (306) unter die Arbeitsebene und des Versetzens der Messbrücke (3) unter die geschnittene Glasscheibe (GS'),
- einen fünften Schritt des Eingreifens an der geschnittenen Glasscheibe (GS') mittels eines oder mehrerer an der Messbrücke (3) vorhandener Eingriffelemente (309),
- einen sechsten Schritt des Bewirkens einer Relativbewegung zwischen der geschnittenen Glasscheibe (GS') und den Anschlagelementen (306) in einer Längsrichtung (X309), um die zuvor unter der geschnittenen Glasscheibe (GS') befindlichen Anschlagelemente (306) freizulegen,
- einen siebten Schritt des Versetzens der Anschlagelemente über die Arbeitsebene (2),
wobei das Verfahren ferner ein Durchführen einer Wiederholung jedes des ersten bis siebten Schritts beinhaltet, wobei:
- die Messbrücke (3) während der Wiederholung des zweiten Schritts das Positionieren der Glasscheibe (GS) mittels des einen oder der mehreren Anschlagelemente (306) unterstützt und die während des dritten Schritts geschnittene Glasscheibe (GS') hält,
- die Messbrücke (3) während der Wiederholung des dritten Schritts entlang der Arbeitsebene (2) versetzt wird, um die geschnittene Glasscheibe (GS') in eine Entnahmeposition von der Maschine (1) zu bringen.

2. Verfahren nach Anspruch 1, wobei der fünfte Schritt ferner ein Anheben der geschnittenen Glasscheibe (GS') in Bezug auf die Arbeitsebene (2) beinhaltet.

3. Verfahren nach Anspruch 2, das ein Anheben der geschnittenen Glasscheibe (GS') in Bezug auf die Arbeitsebene mittels Anhebens des einen oder der mehreren Eingriffelemente (309) der Messbrücke (3) beinhaltet.

4. Verfahren nach Anspruch 1, wobei der sechste Schritt ein Versetzen der geschnittenen Glasscheibe (GS') in Bezug auf die Anschlagelemente (306) mittels eines Versetzens des einen oder der mehreren Eingriffelemente (309) der Messbrücke (30, 30') beinhaltet.

5. Verfahren nach Anspruch 1, wobei während der Wiederholung des dritten Schritts ein Luftkissen auf der Arbeitsebene (2) in einem deaktivierten Zustand gehalten wird.

6. Bewegliche Anordnung (30; 30') für eine Messbrücke (3) einer Schneidemaschine (1) für Glasscheiben (GS), wobei die bewegliche Anordnung Folgendes beinhaltet:
- einen Tragrahmen (301),
- ein Anschlagelement (306) für eine Glasscheibe (GS), das zwischen einer Position oberhalb einer Arbeitsebene (2) der Glasscheiben-Schneidemaschine und einer Position unterhalb der Arbeitsebene (2) versetzbar ist,
wobei die bewegliche Anordnung (30; 30') **dadurch gekennzeichnet ist, dass** sie ferner ein zum Eingreifen an einer auf der Arbeitsebene (2) befindlichen geschnittenen Glasscheibe (GS') ausgelegtes Eingriffelement (309) beinhaltet, wobei das Eingriffelement (30) in Bezug auf das Anschlagelement (306) bewegbar (307, 308) ist, um dessen Entfernung entlang einer Längsrichtung der Maschine (1) zu variieren, wobei das Anschlagelement (306) und das Eingriffelement (309) auf den Tragrahmen (30) montiert sind.

7. Bewegliche Anordnung (30; 30') nach Anspruch 6, die ferner einen an dem Tragrahmen (301) angelenkten und das Anschlagelement (306) lagernden Kipphebel beinhaltet, wobei der Kipphebel (302) zwischen einer der Position des Anschlagelements (306) oberhalb einer Arbeitsebene (2) einer Glasscheiben-Schneidemaschine (1) entsprechenden angehobenen Position und einer der Position des Anschlagelements (306) unterhalb der Arbeitsebene (2) entsprechenden abgesenkten Position versetzbar ist.

8. Bewegliche Anordnung (30; 30') nach Anspruch 6 oder 7, wobei es sich bei dem Eingriffelement um eine Saugglocke (309) handelt, die in Bezug auf das Anschlagelement (306) durch einen Schlitten (308) in Längsrichtung entlang des Tragrahmens (301) bewegbar getragen ist.

9. Bewegliche Anordnung (30; 30') nach Anspruch 8, wobei die Saugglocke (309) an dem Schlitten (308) entlang einer Vertikalrichtung (Z) verfahrbar befestigt ist und ferner mittels einer Linearstelleinrichtung (A309) zwischen einer abgesenkten Position und einer angehobenen Position versetzbar ist.

10. Bewegliche Anordnung (30') nach einem der Ansprüche 6 bis 9, die ferner eine Erweiterung (313) des Tragrahmens (301) beinhaltet, die an deren freiem Ende eine durch eine Linearstelleinrichtung (311) gelagerte Unterlage (312) trägt, wobei die Unterlage (312) mittels der Linearstelleinrichtung (311) zwischen einer abgesenkten und einer angehobenen Position versetzbar ist.

11. Bewegliche Anordnung (30; 30') nach Anspruch 8, wobei die Saugglocke (309) in einer Längsrichtung (X) verlängert ist.

12. Messbrücke (3) für eine Schneidemaschine (1) für Glasscheiben (GS), die eine Vielzahl beweglicher Anordnungen (30; 30') nach einem der Ansprüche 6 bis 11 beinhaltet.

13. Glasscheiben-Schneidemaschine (1), die Folgendes beinhaltet:
- eine Arbeitsebene (2),
- eine Schneidbrücke (6) und
- eine Messbrücke (3), die entlang einer Längsrichtung (X) der Maschine (1) bewegbar ist und zum Unterstützen des Positionierens einer Glasscheibe (GS) in einer gewünschten Weise in Bezug auf eine Schneidlinie (T) der Maschine (1) ausgelegt ist,
wobei die Maschine (1) **dadurch gekennzeichnet ist, dass** die Messbrücke (3) eine Vielzahl beweglicher Einrichtungen (30; 30') nach einem der Ansprüche 6 bis 11 umfasst.

## Revendications

1. Procédé pour découper et déplacer une feuille de verre (GS, GS') le long d'un plan de travail (2) d'une machine de découpe de verre (1), ladite machine de découpe de verre (1) comprenant :
- un plan de travail (2),
- un pont de mesure (3) mobile le long dudit plan de travail (2) dans une direction longitudinale (X, X3, X3'), ledit pont de mesure comportant une pluralité d'éléments de butée (306) pour ladite feuille de verre (GS) mobiles avec ledit pont de mesure dans une direction longitudinale (X) et pouvant en outre se déplacer entre une position faisant saillie au-dessus dudit plan de travail (2) et une position en dessous dudit plan de travail (2), le pont de mesure (3) comportant en outre un ou plusieurs élément(s) d'engagement (309),
le procédé comprenant les étapes suivantes :
- une première étape d'avancement le long dudit plan de travail (2) d'une feuille de verre (GS) à découper,
- une deuxième étape de positionnement de ladite feuille de verre (GS) à découper d'une manière souhaitée par rapport à une ligne de découpe (T) de la machine (1) avec l'aide dudit pont de mesure (3),
- une troisième étape de découpe de ladite feuille de verre (GS) le long de ladite ligne de découpe (T) permettant d'obtenir une feuille de verre découpée (GS'),
- une quatrième étape de déplacement desdits éléments de butée (306) en dessous dudit plan de travail et de déplacement du pont de mesure (3) en dessous de ladite feuille de verre découpée (GS'),
- une cinquième étape d'engagement de la feuille de verre découpée (GS') au moyen d'un ou de plusieurs élément(s) d'engagement (309) prévu(s) sur ledit pont de mesure (3),
- une sixième étape d'impression d'un mouvement relatif entre ladite feuille de verre découpée (GS') et lesdits éléments de butée (306) dans une direction longitudinale (X309) de manière à découvrir lesdits éléments de butée (306) précédemment en dessous de la feuille de verre découpée (GS'),
- une septième étape de déplacement des éléments de butée au-dessus du plan de travail (2),
le procédé comportant en outre le fait de réaliser une répétition de chacune des étapes une à sept, dans lequel :
- pendant la répétition de ladite deuxième étape, le pont de mesure (3) aide au positionnement de la feuille de verre (GS) au moyen dudit ou desdits plusieurs élément(s) de butée (306) et maintient la feuille de verre (GS') découpée pendant la troisième étape,
- pendant la répétition de la troisième étape, le pont de mesure (3) se déplace le long dudit plan de travail (2) pour amener ladite feuille de verre découpée (GS') dans une position de déchargement de ladite machine (1).

2. Procédé selon la revendication 1, dans lequel ladite cinquième étape comporte en outre le soulèvement de ladite feuille de verre découpée (GS') par rapport audit plan de travail (2).

3. Procédé selon la revendication 2, comportant le soulèvement de la feuille de verre découpée (GS') par rapport audit plan de travail par soulèvement dudit ou desdits plusieurs élément(s) d'engagement (309) du pont de mesure (3).

4. Procédé selon la revendication 1, dans lequel ladite sixième étape comporte le déplacement de ladite feuille de verre découpée (GS') par rapport auxdits éléments de butée (306) par déplacement dudit ou desdits plusieurs élément(s) d'engagement (309) dudit pont de mesure (30, 30').

5. Procédé selon la revendication 1, dans lequel, pendant la répétition de la troisième étape, un coussin d'air sur ledit plan de travail (2) est maintenu dans un état désactivé.

6. Ensemble mobile (30 ; 30') pour un pont de mesure (3) d'une machine de découpe (1) de feuille de verre (GS), l'ensemble mobile (30 ; 30') comportant :
- un cadre de support (301),
- un élément de butée (306) pour une feuille de verre (GS) pouvant se déplacer entre une position au-dessus d'un plan de travail (2) d'une machine de découpe de feuille de verre et une position en dessous dudit plan de travail (2),
l'ensemble mobile (30 ; 30') étant **caractérisé en ce qu'**il comporte en outre un élément d'engagement (309) configuré pour s'engager avec une feuille de verre découpée (GS') qui est située sur ledit plan de travail (2), ledit élément d'engagement (309) étant mobile (307, 308) par rapport audit élément de butée (306) de manière à faire varier une distance de celui-ci le long d'une direction longitudinale de la machine (1), ledit élément de butée (306) et ledit élément d'engagement (309) étant ajustés sur ledit cadre de support (30).

7. Ensemble mobile (30 ; 30') selon la revendication 6, comportant en outre un bras oscillant (302) articulé sur ledit cadre de support (301) et portant ledit élément de butée (306), ledit bras oscillant (302) pouvant se déplacer entre une position surélevée correspondant à la position dudit élément de butée (306) au-dessus d'un plan de travail (2) d'une machine de découpe de feuille de verre (1) et une position abaissée, correspondant à la position dudit élément de butée (306) en dessous dudit plan de travail (2).

8. Ensemble mobile (30 ; 30') selon la revendication 6 ou 7, dans lequel ledit élément d'engagement est une ventouse (309) portée par un coulisseau (308) mobile longitudinalement le long dudit cadre de support (301) par rapport audit élément de butée (306).

9. Ensemble mobile (30 ; 30') selon la revendication 8, dans lequel ladite ventouse (309) est montée sur ledit coulisseau (308) en coulissement le long d'une direction verticale (Z) et peut en outre se déplacer au moyen d'un actionneur linéaire (A309) entre une position abaissée et une position surélevée.

10. Ensemble mobile (30') selon l'une des revendications 6 à 9, comportant en outre une extension (313) dudit cadre de support (301) portant, au niveau d'une extrémité libre de celle-ci, un patin (312) supporté par un actionneur linéaire (311), ledit patin (312) pouvant se déplacer au moyen dudit actionneur linéaire (311) entre une position abaissée et une position surélevée.

11. Ensemble mobile (30 ; 30 ') selon la revendication 8, dans lequel ladite ventouse (309) est allongée dans une direction longitudinale (X).

12. Pont de mesure (3) pour une machine de découpe (1) de feuille de verre (GS) comportant une pluralité d'ensembles mobiles (30 ; 30') selon l'une des revendications 6 à 11.

13. Machine de découpe de feuille de verre (1) comportant :
- un plan de travail (2),
- un pont de découpe (6), et
- un pont de mesure (3) mobile le long d'une direction longitudinale (X) de la machine (1) et configuré pour aider au positionnement d'une feuille de verre (GS) d'une manière souhaitée par rapport à une ligne de découpe (T) de la machine (1),
la machine (1) étant **caractérisée en ce que** ledit pont de mesure (3) comporte une pluralité d'ensembles mobiles (30 ; 30') selon l'une des revendications 6 à 11.
